# EUROPEAN PATENT SPECIFICATION

(11) **EP 2 713 764 B1**
(45) Date of publication and mention of the grant of the patent: **24.10.2018**
(21) Application number: 12726541.1
(22) Date of filing: 30.05.2012
(51) Int. Cl.: A23G 3/00, A23G 3/26

(54) **SYSTEM AND METHOD FOR CONTINUOUSLY COATING CONFECTIONARY PRODUCT**
SYSTEM UND VERFAHREN ZUM KONTINUIERLICHEN BESCHICHTEN VON SÜSSWAREN
SYSTÈME ET PROCÉDÉ POUR LE REVÊTEMENT EN CONTINU DE PRODUIT DE CONFISERIE

(30) Priority: 31.05.2011 US 201161491759 P; 10.06.2011 US 201161495451 P
(43) Date of publication of application: 09.04.2014
(73) Proprietor: Intercontinental Great Brands LLC, East Hanover, NJ 07936 (US)
(72) Inventor: ELEJALDE, Cesar C., Northfield, Illinois 60093 (US); VAN NIEKERK, Miles, Northfield, Illinois 60093 (US); COTTEN, Gerald B., Northfield, Illinois 60093 (US)
(74) Representative: Wilson Gunn
(86) International application number: PCT/US2012/039973
(87) International publication number: WO 2012/166785

(56) References cited:
- EP-A2- 0 212 824
- WO-A1-01/11984
- DE-A1- 2 324 946
- DE-A1- 19 518 721
- US-A- 3 911 860

## Description

### FIELD

The disclosure generally relates to a continuous coating of pieces or cores of confectionary product, and more particularly to a continuous coating of pieces or cores of confectionary product via a drum coating arrangement.

### BACKGROUND

There are numerous known processes for coating gum and confectionary products. These processes include batch-type and continuous coating.

For batch-type processes, large rotating containers are utilized to coat confectionary cores or pieces (particularly gum cores or pieces). Initially, the confectionary material may be produced by a standard extrusion or batch processes and formed into rope or large thin sheets of material several inches or a foot or more in width. Separation lines are pressed or formed into the sheets, thereby forming the shapes of the smaller pieces (i.e. "cores"). The material may then be stored in a cooler or under a cooled atmosphere in order to condition them for further processing.

Pursuant to more recent batch-type processes, the confectionary material is dumped into rotating mixers and separated into cores by a tumbling process. Thereafter, a coating solution, such as a sugar syrup, is added to the mixer during mixer rotation. Hot air at a temperature of approximately 120° F. is further applied to dry the coated cores.

In order to form a uniform and consistent coated gum product with a coat of the desired thickness, this process is repeated numerous times until completion of the requisite coating. In order to achieve an acceptable coating, the process is repeated up to 40-50 times with small, thin layers being added each time. This process can take up to 6-7 hours to complete, and involve a good deal of labor.

In an effort to provide an improved upon and more efficient coating process over the batch-type processes discussed above, continuous coating processes have been developed. In such processes, small cores or pieces of confectionary material (particularly gum) are introduced into one or more rotating cylindrical drums. Therein, the pieces are lightly coated with a sugar solution. A continuous flow of heated air is circulated through the drums and dries the coating solution on the gum cores at the same time that the material is being coated. Conduits or conveyors are utilized to interconnect the drums and transport the material being coated from one drum to the other.

The above processes being described, it should be noted that some types of confectionary may desirably call for a coating that is applied in multiple layers, with each layer including compositional differences. As such compositionally different layers may interact differently with the core confectionary pieces to which they are applied (i.e. be absorbed by the cores or bind to the cores at different rates), it may be inefficient to apply coating layers in a single drum or multiple drums that are identically configured and operated. For instance, certain confectionery cores, such as chewy candy cores, and particularly powder-filled chewy candy cores, are delicate in nature. Application of a hard outer coating to such delicate cores can be problematic as the cores may be crushed or collapse under the product weight tumbling in typical batch-type hard coating pans. Accordingly, it may be desirable to coat such cores with a soft pre-coating prior to a subsequent hard outer coating. This can provide a final coated chewy candy product that is more stable than if it were simply hard pan coated alone. Application of such a soft pre-coating may involve applying a liquid material in one drum and a powder material in a second drum, which binds to the liquid material to form the soft coating layer on the chewy candy cores. In such a process, it may be desirable to have a longer residence time in the second drum so that the powder material has sufficient time to bind to the liquid material. Accordingly, a system and method that allows for variation in drum interaction with core confectionary pieces would be desirable.

WO 01/11984 A1 describes the serial arrangement of two drums for coating confectionery with either a liquid or a powder.

### SUMMARY

Disclosed is a system for continuously coating individual pieces of confectionery product, the system comprising:
- a product feed device;
- at least one drum coating arrangement configured to receive the individual pieces of confectionery product from said product feed device, said drum coating arrangement including a first rotating drum rotatable about a first drum axis and a second rotating drum rotatable about a second drum axis;
- a first drum volume defined by said first rotating drum; and
- a second drum volume defined by said second rotating drum, said first drum volume being communicable with said second drum volume, wherein said first rotating drum is configured to apply a liquid material to the individual pieces of confectionery product and said second rotating drum is configured to apply a dry powder material to the individual pieces of confectionery product;
- wherein said drum coating arrangement is configured such that the confectionery product has a longer residence time in said second drum volume than said first drum volume.

Also disclosed is a method for continuously coating individual pieces of confectionery product, the method comprising:
- feeding the individual pieces of confectionery product from a product feed device into at least one drum coating arrangement, said drum coating arrangement including a first rotating drum and a second rotating drum;
- transporting the individual pieces of confectionery product through a first drum volume defined by said first rotating drum, said transporting through said first drum volume occurring in a first residence time;
- applying a liquid material to the individual pieces of confectionery product during said first residence time;
- transferring the individual pieces of confectionery product from said first drum volume to a second drum volume defined by said second rotating drum;
- transporting the individual pieces of confectionery product through said second drum volume, said transporting through said second drum volume occurring in a second residence time, said second residence time being longer than said first residence time; and
- applying a dry powder to the individual pieces of confectionery product during said second residence time.

### BRIEF DESCRIPTION OF THE DRAWINGS

The accompanying drawings incorporated in and forming a part of the specification embodies several aspects of the present invention and, together with the description, serve to explain the principles of the invention. In the drawings:
FIG. 1 is a schematic plan view of a system for continuously coating individual pieces of confectionary product in accordance with an exemplary embodiment;
FIG. 2 is a schematic perspective view of the system in accordance with the exemplary embodiment shown in FIG. 1;
FIG. 3 is a schematic front elevation view of the system in accordance with the exemplary embodiment shown in FIG. 1;
FIG. 4 is a schematic side elevation view of the system in accordance with the exemplary embodiment shown in FIG. 1;
FIG. 5 is a partial and schematic perspective view of the system in accordance with the exemplary embodiment shown in FIG. 1;
FIG. 6 is a partial and schematic cross-sectional view of the system in accordance with the exemplary embodiment shown in FIG. 1;
FIG. 7 is another partial and schematic cross-sectional view of the system in accordance with the exemplary embodiment shown in FIG. 1;
FIG. 8 is an alternative partial and schematic cross-sectional view of the system in accordance with the exemplary embodiment shown in FIG. 1;
FIG. 9 is a further alternative partial and schematic cross-sectional view of the system in accordance with the exemplary embodiment shown in FIG. 1; and
FIG. 10 is a partial and schematic perspective view of the system in accordance with the exemplary embodiment shown in FIG. 1.

### DETAILED DESCRIPTION

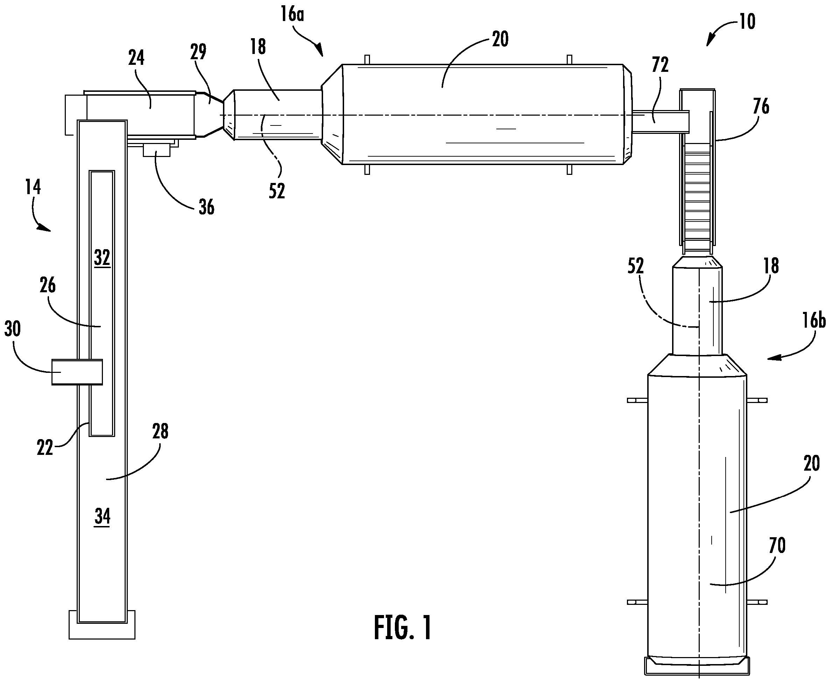

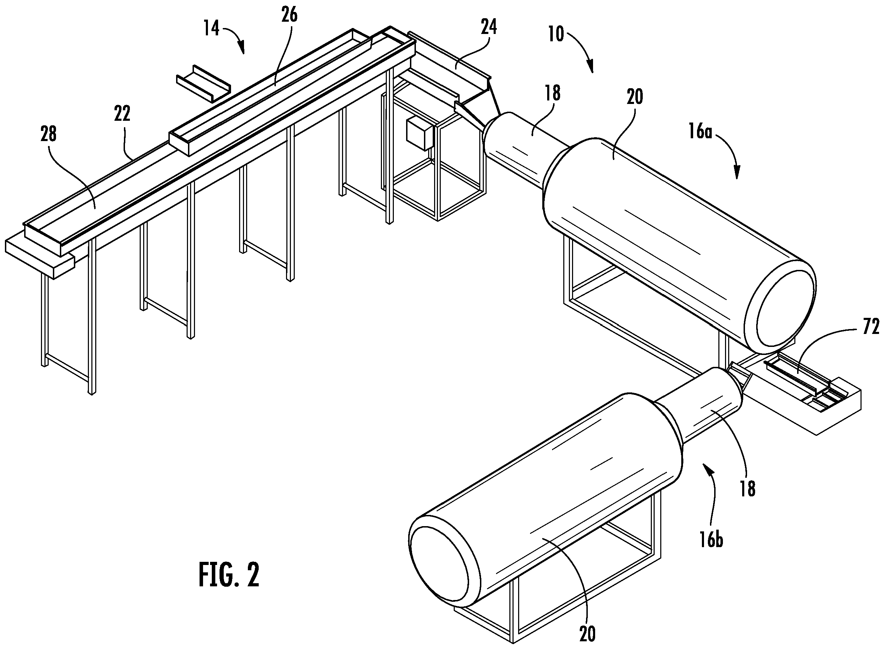

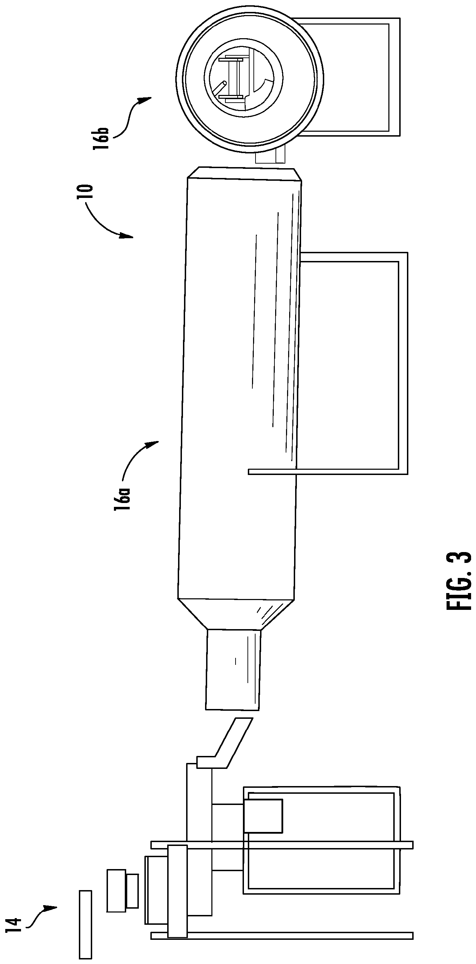

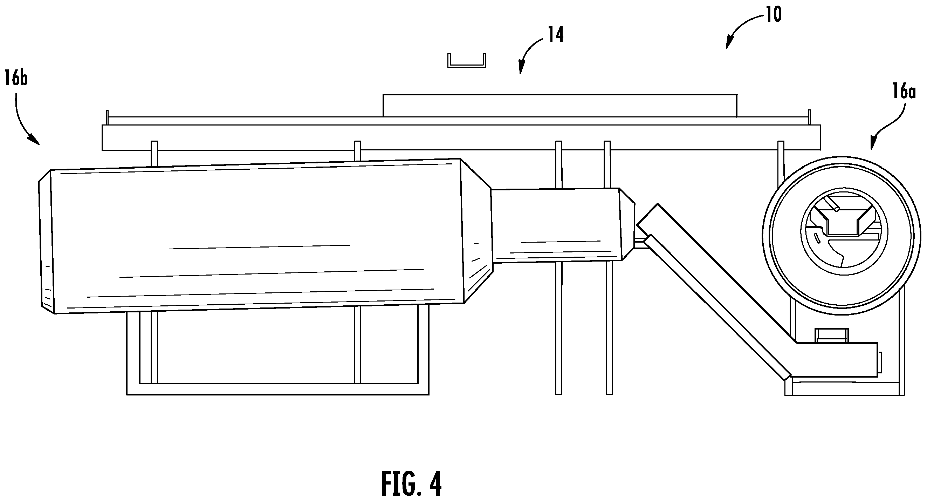

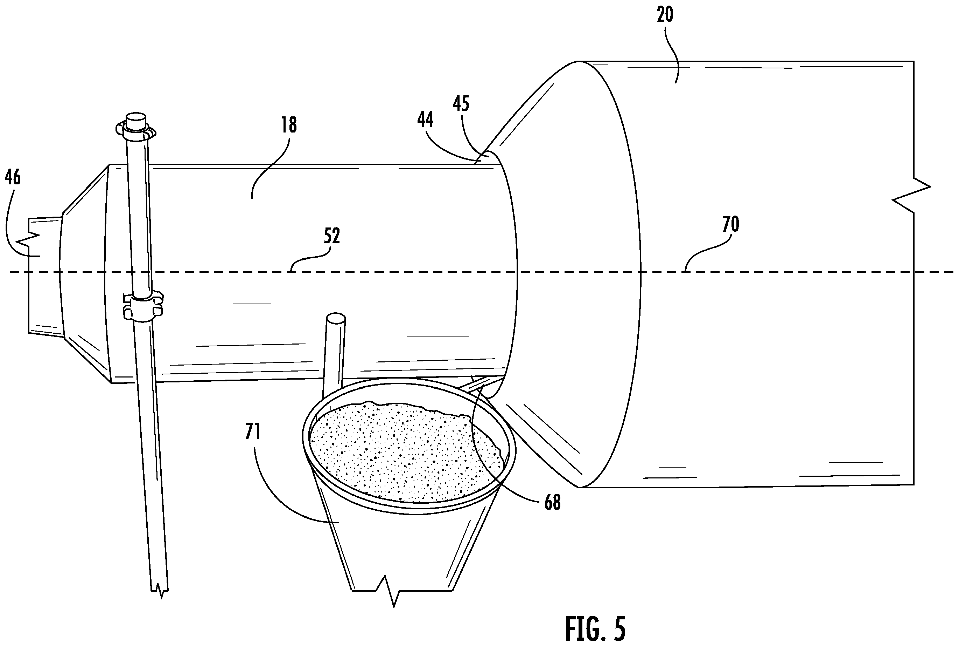

Referring to Figures 1-10, a system 10 for continuously coating individual pieces 12 of confectionary product via agglomeration is shown. Referring first to Figures 1-3, the system 10 generally includes a product feed device 14 and at least one drum coating arrangement 16a, 16b, which each include a first rotating drum 18 and a second rotating drum 20. These components and the manner in which they interact in order to coat the confectionary pieces 12 will be discussed in greater detail hereinbelow.

The confectionary pieces 12 enter the system 10 at the product feed device 14. In an exemplary embodiment shown generally in Figures 1-4, the feed device 14 includes an accumulator 22 and a feeder 24. The accumulator 22 and the feeder 24, in conjunction with the other elements of the feed device 14 (these elements being discussed in greater detail below), control an amount of product (i.e. pieces 12) that enter the drum coating arrangement 16a. Such control (as implemented by the computer(s) discussed below) is facilitated by allowing the product to enter feed device 14 via a first tray 26 and a second tray 28 of the accumulator 22, and maintaining a desirable amount of the product at a desirable height or depth within the trays prior to entering the feeder 24.

In the exemplary embodiment of Figures 1-4, product is supplied to the first tray 26 via an elevating conveyor and depositing device 30 (shown schematically in the Figures). As the device 30 deposits the product on the first tray 26, the tray slides back and forth over the second tray 28 (via a wheel and guide rail system in an exemplary embodiment), transporting the product to the lower tray 28 at areas of lesser or no product depth. This transfer occurs via a conveyor 32 disposed on the first tray 26, whereby the first tray 26 is actuated to slide over an area of lesser depth in the second tray 28, and the conveyor 32 (which can move in either direction and transport product over either edge) moves to transfer the product over an edge of the first tray 26 and down into the second tray 28. After the product has been deposited in a particular area to a desirable height or depth, the first tray 26 may move or slide to another area over the second tray 28 with a lesser depth. An electronic eye that extends from the first tray 26 (at one or both sides of the tray 26) may be used to monitor height/depth of the product within the second tray.

Once deposited to a desirable depth across a desired length of the second tray 28, a conveyor 34 disposed on the second tray 28 transports the product to the feeder 24. Therein, weight of the product is monitored via an electronic scale 36 disposed under the feeder 24, with the amount of product initially entering the feed device 14 being ultimately conveyed in a continuous flow from the feeder 24 to a chute 29 connecting the feeder to the drum coating arrangement 16a.

It should be noted that actuation of the first tray 26, the conveyors 32,34, the scale 36, the depositing device 30, and the desirable depth to which the first tray 26 deposits product in the second tray 28 are controllable via a computer micro-processor or micro-processors in communication with the various components of the feed device 14 individually or as a whole. These computer(s) may control or communicate with a remainder of the components of the system 10. Product height in the second tray may also be communicated to the computer(s) from devices such as the electronic eye mentioned above. In an exemplary embodiment, the product is deposited across a substantially entirety of the second tray length at a height/depth of approximately 6 to 10 inches. The product is then conveyed from the second tray to the feeder 24, where it is maintained at a desirable height/depth of 1 to 10 inches, as it is further conveyed from the feeder 26 to the chute 29.

Having been desirably accumulated in the feed device 14, the product may now be continuously fed down the chute 29 and into the drum coating arrangement 16a. As shown in Figures 1-4 and 5-6 in particular, the arrangement 16a (as well as 16b, which is configured similarly arrangement 16a) includes a first rotating drum 18 and a second rotating drum 20. These drums 18 and 20 may be fixed relative to each other (in the exemplary positions shown in the Figures) via any known affixing or locking mechanism, the mechanism affixing the drums via connection to surfaces of the drums or structures supporting the drums.

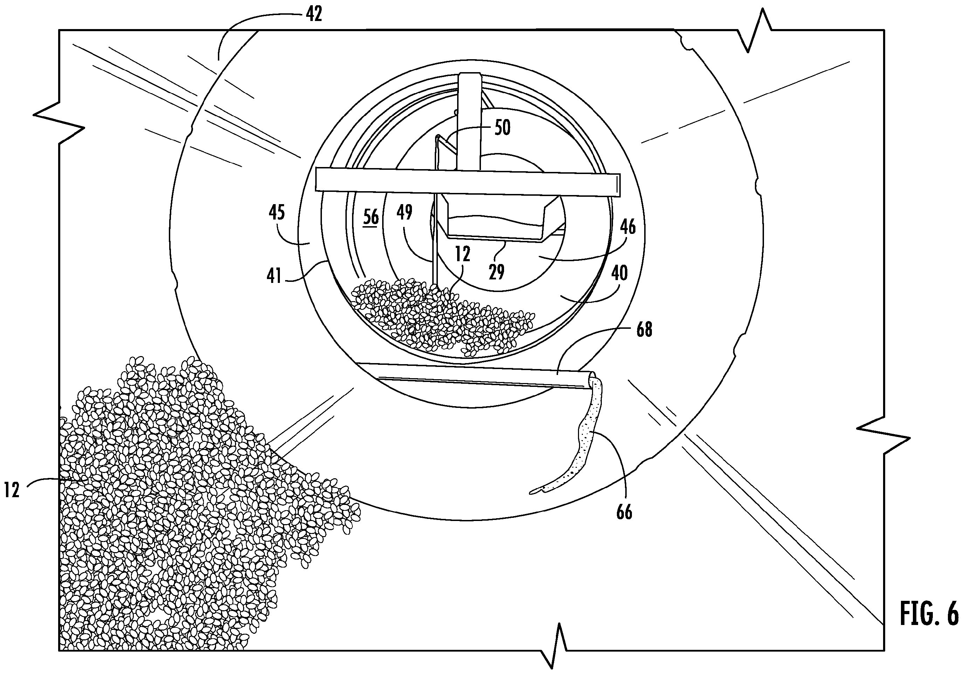

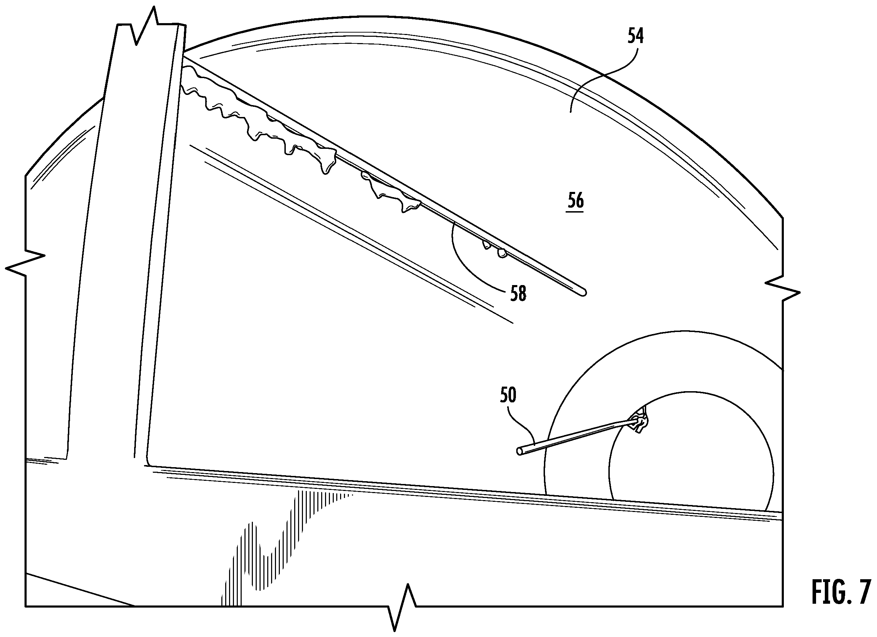

In addition, and as is best shown in Figure 6, the first drum defines a first drum volume 40, and the second drum defines a second drum volume 42. In the exemplary embodiment of Figures 6 and 7, the drum volumes 40 and 42 communicate via insertion of an end 41 of the first drum 18 into a potion of the second drum 20 that tapers down to an inlet opening 44 thereof, allowing the pieces 12 to flow from the first drum 18 into the second drum 20. This insertion of the end 41 of the fist drum 18 into the inlet opening 44 of the second drum 20 also forms an annulus 45 between the drums.

During transport of the pieces 12 from an inlet opening 46 in the first drum 18 (and thus an inlet into the drum arrangement 16a in general) to an outlet opening 48 of the second drum 20 (and thus an outlet from the drum arrangement 16a in general), the pieces 12 will have a longer residence time in the second drum volume 42 than the first drum volume 40 (with each pieces 12 desirably having substantially the same residence time in each drum 18 and 20 to facilitate consistent coating). In an exemplary embodiment, the longer residence time in the second drum volume 42 is achievable because the drums 18, 20 are configured such that the second drum volume 42 is greater than the first drum volume 40 via a greater diameter and/or length of the second drum 20 relative to the first drum 18.

Residence time within each drum is important in the system 10 as described below because of the different materials applied to the pieces 12 of product in the first drum 18 and the second drum 20. Referring first to the first drum 18, a liquid material 49 is chosen for feed into the first drum volume 40. This material may be any conventional sugar-based or sugar-free syrup material that will act as a coating or binding solution, and is fed into the first drum volume 40 via at least one nozzle 50 that is best shown in Figure 6. It is important that the pieces 12 include a relatively lesser residence time in this drum so that the syrup 49 being fed by the nozzle 50 is not absorbed by the pieces 12. The nozzle 50 extends to deliver the material 49 into the first drum volume 40 via the inlet opening 46 of the first drum 18 (at a tapered front portion thereof). Therein, the nozzle 50 feeds the liquid material 49 into the drum volume 40 via at least one of a dripping, drizzling, or spraying of the liquid material 49 from at least one dispensing point disposed an end and/or body (with openings defined along the body) of the nozzle 50. The nozzle 50 and/or apparatus supporting the nozzle and connecting the nozzle to a liquid supply (not shown) are configured such that a liquid material dispensing point(s) defined by the nozzle is positionally adjustable along an entire length of the first drum 18, allowing syrup output to occur anywhere along an entire length of the first drum 18. In an exemplary embodiment, the dispensing point is at the end of the nozzle 50, and positioned at a depth of approximately 25% to 75% into the first drum 18 (i.e. the dispensing end of the nozzle extends into the drum to a distance of approximately 25% to 75% of the drum length).

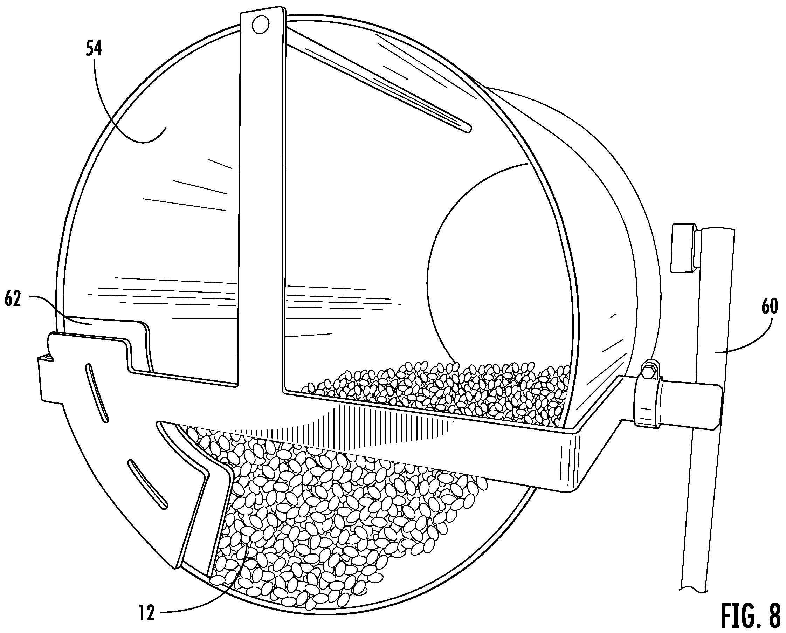

As the first drum 18 rotates about a central first drum axis 52, the liquid material 49 coats the pieces 12 about a surface thereof. The pieces 12 are transported from the inlet opening 46 to an outlet opening 54 via an incline of the first drum 18, wherein the inlet opening 46 is higher than the outlet opening 54. During this rotational transportation through the first drum volume 40, the liquid material 49 coats the pieces 12. However, due to potentially adherent qualities of the liquid material 49, some of the pieces 12 may become lodged to an inner surface 56 of the first drum 18. In order to dislodge the adhered pieces 12, a release assist bar 58 is positioned so as to extend into the first drum volume 18 via the outlet opening 54 (as shown in Figures 7 and 8). However, the release assist bar 58 could be configured in other manners, such as extending into the first drum volume 18 via the inlet opening 46. The bar 58 is positioned within the first drum volume 40 to be substantially parallel to the central first drum axis 52 and in proximity to the inner surface 56 (at a relatively upper portion thereof in Figures 7 and 8) of the first rotating drum 18. The proximity of the bar 58 to the inner surface 56 (the distance being less than a minor diameter of the pieces 12) allows the bar 58 to dislodge the pieces 12 that adhere to the inner surface 56, thereby knocking the pieces 12 down into a flow of the transported pieces 12 towards the outlet opening 54. In the exemplary embodiment of Figures 7 and 8, the bar 58 is affixed at or in proximity to an outlet opening end of the first drum 18 via a T-bar supported by mechanical fastening or welding to a first drum support structure 60 (though the T-bar or any other structure supporting the bar 58 may be affixed directly to the first drum 18).

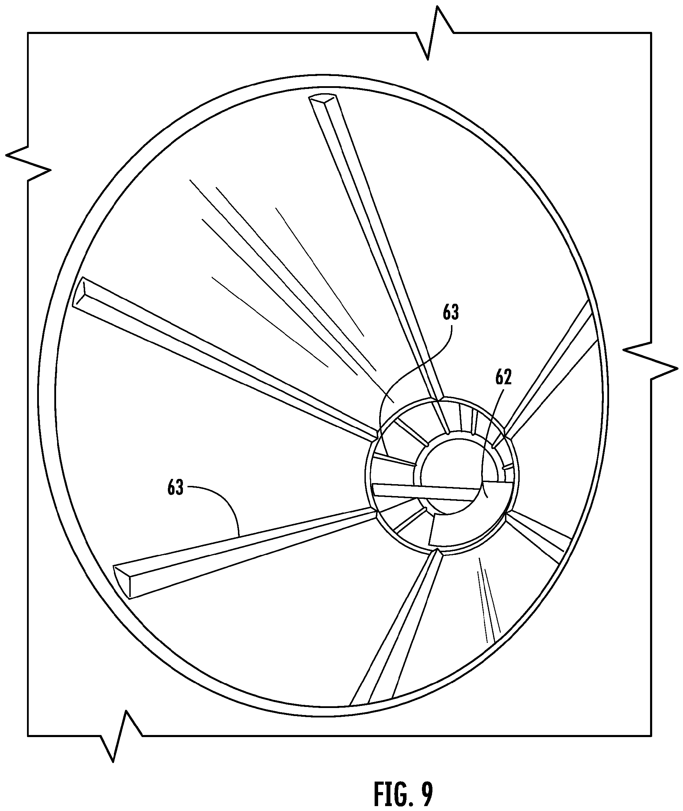

Also disposed at an outlet opening end of the first drum 18 in the exemplary embodiment of Figures 8 and 9 is a weir plate 62. The weir plate 62 (which may be constructed of Teflon or other such materials) is positioned between the first drum volume 40 and second drum volume 42, so as to desirably control product flow from the first drum volume 40 to the second drum volume 42. The weir plate 62 is removable and/or positionally adjustable along a circumferential perimeter of said first drum volume 40 (via rotation of the plate 62 and/or the first drum 18), and, like the bar 58, is affixed at or in proximity to an outlet opening end of the first drum 18 via a bar/plate device supported by mechanical fastening or welding to the first drum support structure 60 (though the bar device or any other structure supporting the plate 62 may be affixed directly to the first drum 18). This removability and/or adjustability allows for selective placement of the plate 62 into and out of a flow of the pieces 12 towards the second drum volume 42, thereby controlling the flow (i.e. impeding the flow) when present. Though the weir plate 62 is shown to be connected to the drum or support 60 via the same T-bar as the release assist 58, it should be appreciated that the weir plate 62 and release assist 58 may be connected to the drum or support 60 via different structures. As is shown in Figure 9, inner surfaces of the drums 18 and 20 may also optionally include ribs 63 configured to facilitate coating of the pieces 12.

As the pieces 12 flow past the weir plate 62, the pieces 12 fall from the outlet opening 54 of the first drum 18, and into the second drum volume 42. The pieces 12 that enter the second drum volume 42 do so with the liquid material 49 having already been applied thereto. As is mentioned briefly above, insertion of the end 41 of the fist drum 18 into the inlet opening 44 of the second drum 20 forms an annulus 45 between the drums. Importantly, this annulus 45 provides both an entry point for material into the second drum (see below), and a sampling point for analyzing liquid coated pieces 12 flowing from the first drum 18 to the second drum 20.

Referring now to the second drum 20, any conventional dry powder material 66 is chosen for feed into the second drum volume 42 and application to the pieces 12. This material may be any conventional sugar-based or sugar-free dry/finely granulated material (such as bakers special sugar) that will adhere to the liquid material 49 that has already been applied to the pieces 12, and is fed into the second drum volume 42 via a powder tube 68 that is best shown in Figure 6. It is important that the pieces 12 include a relatively longer residence time so that the powder material 66 may have sufficient time to bind to the liquid material 49 that has been applied to the pieces 12. The tube 68 extends into the second drum volume 42 via the annulus 45 between the first drum 18 and second drum 20. Therein, the tube 68 feeds the powder material 66 into the second drum volume 42 from an end and/or body (with opening defined along the body) of the tube 68. The tube 68 and/or apparatus supporting the tube 68 and connecting the tube 68 to a powder supply 71 are configured such that a powder material output(s) defined by the tube is positionally adjustable along an entire length of the second drum 20 allowing powder output to occur anywhere along an entire length of the second drum 20. In an exemplary embodiment, the output is at the end of the tube 68, and positioned as close as possible to an inlet end of the second drum 20.

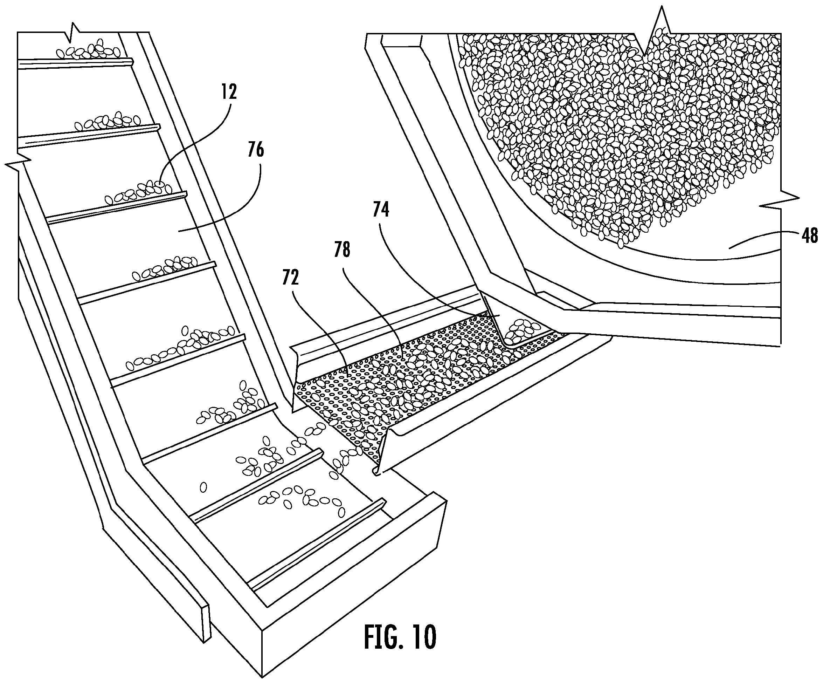

Similarly to the first drum 18, as the second drum 20 rotates about a central first drum axis 70, the pieces 12 of confectionary are coated with the powder material 66, whereby the powder material 66 binds to the liquid material 49 (from the first drum 18) that already coats the surface of the pieces 12. The pieces 12 are transported from an annulus position where the pieces 12 fall from the first drum 18 into the second drum volume 42 to an outlet opening 48 of the second drum 20 (the outlet opening being best shown in Figure 10) via an incline of the second drum 20 that allows the annulus 45 to be higher than the outlet opening 48. This incline in the second drum 20 further allows the overall drum arrangement 16a to tilt downwards from the inlet opening 46 of the first drum 18, down to the annulus 45, and further down to the outlet opening 48 of the second drum 20. During the rotational transportation through the second drum volume 42, the powder material 66 coats the pieces 12, wherein the pieces leaving the second drum 20 are provided with a soft outer coating via a combination of liquid material 49 applied first directly to the pieces 12 and powder material 66 bound to the liquid material.

After exiting the second drum volume 42, if the system 10 includes multiple drum arrangements (as is the case with the exemplary system 10 shown in Figures 1-4, though the system 10 may include more or less than two arrangements) the pieces 12 (which now include a soft outer coating) are funneled to a scalper mechanism 72 that is best shown in Figure 10. As the scalper mechanism 72 vibrates, the pieces 12 are transported from a funnel 74 to an elevator conveyor 76, which transports the pieces 12 to the next drum arrangement in series 16b. In addition, the vibration removes any excess powder from the pieces 12, the excess powder escaping the scalper 72 via staggered openings 78 disposed in the scalper 72. The pieces 12 travel up the conveyor 76 and into the arrangement 16b, which is substantially the same as arrangement 16a.

After exiting the final drum arrangement in the system (in the exemplary embodiment of Figures 1-4 that arrangement is arrangement 16b), the soft coated pieces 12 are gathered for conditioning. Conditioning occurs in an environment that prevents moisture absorption by the pieces 12, and may include transporting the soft coated pieces 12 to an area of reduced temperature and humidity relative to a temperature and humidity within the drums and in an ambient environment of the drum coating arrangements 16a, 16b. In an exemplary embodiment, this conditioning can occur for 18-48 hours and is believed to cure the soft coating applied to the pieces 12 via a process known as sintering.

Following the above discussed conditioning process, a hard outer coating is applied to the cured/sintered soft coating of the pieces 12. Application of this hard outer coating may occur in a typical batch coating mixer.

By way of exemplary embodiment, the following exemplary compositions of the liquid material 49 and powder material 66, and exemplary composition/sizing of pieces 12 should be noted:

| **Piece size** | |
|---|---|
| Initial Core Weight | 1 .0-3.0 gr |
| Target Weight Gain | 5-30% |

By way of exemplary embodiment, the following exemplary conditions of the system 10 should also be noted:

| **First rotating drum** | |
|---|---|
| Diameter | 0.40-1.20 m |
| Length | 0.20-1.0 m |
| Drum Volume | 0.025-1.13 m³ |
| Drum Inclination | 1-5° |
| Operating Speed | 10∼40 RPM |
| Average Product Residence Time | 20-200 seconds |

| **Second rotating drum** | |
|---|---|
| Diameter | 0.8-2.5 m |
| Length | 0.45-4.0 m 0.226- |
| Drum Volume | 19.635 m³ |
| Drum Inclination | 1-5° |
| Operating Speed | 4∼20 RPM |
| Average Product Residence Time | 10-30 minutes |

In addition, and similarly to the feed device 14, it should be noted that drum rotational speed, drum inclination, scalper actuation, actuation and speed of the elevator conveyor 76, and the desirable depth to which the pieces 12 accumulate within the drums are controllable via a computer micro-processor or micro-processors in communication with the various components of the drum arrangements 16a, 16b individually or as a whole. In fact, one or more computer(s) may or may not control/communicate with an entirety of the system 10.

Furthermore, the drums 18 and 20 are controllable within the system 10 such that the first drum 18 and second drum 20 may rotate at different speeds and be disposed at different inclinations. As both drum rotational speed and drum inclination can effect residence time within the drums, differences in either the rotational speeds of the drums or the inclination of the drums may contribute to or be solely responsible for the longer residence time of the pieces 12 in the second drum volume 42 than the first drum volume 40.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Exemplary embodiments of this invention are described herein, including the best mode known to the inventors for carrying out the invention. Variations of those embodiments may become apparent to those of ordinary skill in the art upon reading the foregoing description. Moreover, any combination of the above-described elements in all possible variations thereof is encompassed by the invention unless otherwise indicated herein or otherwise clearly contradicted by context.

## Claims

1. A system for continuously coating individual pieces of confectionary product (12), the system comprising:
a product feed device (14);
at least one drum coating arrangement configured to receive the individual pieces of confectionary product from said product feed device, said drum coating arrangement including a first rotating drum (18) rotatable about a first drum axis and a second rotating drum (20) rotatable about a second drum axis;
a first drum volume defined by said first rotating drum; and
a second drum volume defined by said second rotating drum, said first drum volume being communicable with said second drum volume, wherein said first rotating drum is configured to apply a liquid material to the individual pieces of confectionery product and said second rotating drum is configured to apply a dry powder material to the individual pieces of confectionery product;
wherein said drum coating arrangement is configured such that the confectionary product has a longer residence time in said second drum volume than said first drum volume.

2. The system of claim 1, wherein said second drum volume is greater than said first volume, said larger second drum volume allowing the pieces of confectionary product to achieve said longer residence time in said second drum volume than said first drum volume;
- or wherein said second rotating drum includes a greater diameter than said first rotating drum, said first drum volume and said second drum volume being communicable via insertion of an output end (41) of said first rotating drum into an input end (44) of said second rotating drum, said insertion allowing the individual pieces of confectionary product to flow from said first drum volume to said second drum volume, or wherein insertion of said output end of said first rotating drum into said input end of said second rotating drum creates an annulus (45) at an overlap of said first rotating drum and said second rotating drum, said dry powder material being fed into said second rotating drum volume via a powder tube (68) inserted into said second drum volume through said annulus,
wherein said powder tube is configured for adjustability of dry powder material output position along a length of said second drum volume;
- or wherein said second rotating drum includes a greater length than said first rotating drum.

3. The system of claim 1, wherein said first rotating drum is configured to apply a liquid material to the individual pieces of confectionary product and said second rotating drum is configured to apply a dry powder material to the individual pieces of confectionary product;
- or wherein said liquid material is optionally fed into said first drum volume via a nozzle (50) inserted into a product input opening at a product input end of said first rotating drum, wherein said nozzle is optionally configured to supply said liquid material via at least one of a drip, drizzle, and spray of said liquid material into said first drum volume; or
- wherein said nozzle is configured for adjustability of liquid material output position along a length of said first drum volume;
- or wherein said first rotating drum receives the individual pieces of confectionary product from said product feed and said second rotating drum receives the individual pieces of confectionary product from said first rotating drum, said drum coating arrangement being positioned on an incline, with a highest point disposed at a product input of said first rotating drum and a lowest point disposed at a product output of said second rotating drum, said incline allowing the individual pieces of confectionary product to move through said drum coating arrangement;
- or wherein said first rotating drum is affixed to said second rotating drum via a locking mechanism contacting an outer surface of each of said first rotating drum and said second rotating drum.

4. The system of claim 1, wherein a weir plate (62) is disposed between said first drum volume and said second drum volume, said weir plate being adjustably positioned relative to said first drum volume and said second drum volume, so as to control product flow from said first drum volume to said second drum volume.

5. The system of claim 1, wherein said first rotating drum includes a release assist bar (58) inserted into said first drum volume from an opening at an output end of said first rotating drum, said release assist bar being disposed substantially parallel to said first drum axis in proximity to an inner surface of said first rotating drum, said release assist bar being configured to dislodge the pieces of confectionary product that adhere to said inner surface of said rotating first rotating drum via said proximity to said inner surface; or
wherein at least one of an inner surface of said first rotating drum and an inner surface of said second rotating drum include ribs.

6. The system of claim 1, wherein said at least one drum coating arrangement is multiple drum arrangements arranged in series and each including said first rotating drum and said second rotating drum, optionally further including a conveyor (76) between said multiple drum coating arrangements, said conveyor including a vibrating portion configured to remove excess dry powder material from the individual pieces of confectionary product, wherein said vibrating portion includes openings disposed in staggered alignment.

7. The system of claim 1, wherein said first rotating drum and said second rotating drum are rotatable at different speeds, or wherein said first rotating drum and said second rotating drum are independently inclinable.

8. A method for continuously coating individual pieces of confectionary product (12), the method comprising:
feeding the individual pieces of confectionary product from a product feed device (14) into at least one drum coating arrangement, said drum coating arrangement including a first rotating drum (18) and a second rotating drum (20);
transporting the individual pieces of confectionary product through a first drum volume defined by said first rotating drum, said transporting through said first drum volume occurring in a first residence time;
applying a liquid material to the individual pieces of confectionary product during said first residence time;
transferring the individual pieces of confectionary product from said first drum volume to a second drum volume defined by said second rotating drum;
transporting the individual pieces of confectionary product through said second drum volume, said transporting through said second drum volume occurring in a second residence time, said second residence time being longer than said first residence time; and
applying a dry powder to the individual pieces of confectionary product during said second residence time.

9. The method of claim 8, wherein said applying of said liquid material includes at least one of dripping, drizzling, and spraying said liquid material into said first drum volume via a nozzle (50) inserted into a product input opening at a product input end of said first rotating drum;
- optionally further including adjusting said nozzle to a desirable liquid material output position along a length of said first drum volume; or
- optionally further including binding said liquid material to the individual pieces of confectionary product via said applying of said liquid material, and binding said dry powder material to said liquid material via said applying of said dry powder material; or
- further including providing a soft outer coating material on the individual pieces of confectionary via said liquid material and said dry powder material bound to said liquid material; or
- optionally further including including conditioning the individual pieces of confectionary with said soft outer coating at a reduced temperature and humidity relative to a temperature and humidity of an ambient environment of the drum coating arrangement, said conditioning occurring for at least 18 hours; and
optionally further including applying a hard outer coating on the individual pieces of confectionary product after said conditioning, said applying of said hard outer coating occurring in a batch coating mixer; or
- further including affixing said first rotating drum to said second rotating drum via a locking mechanism in contact with an outer surface of each of said first rotating drum and said second rotating drum.

10. The method of claim 8, wherein said transporting occurs via a positioning of said drum coating arrangement on an incline, said drum coating arrangement including a highest point disposed at a product input of said first rotating drum and a lowest point disposed at a product output of said second rotating drum.

11. The method of claim 8, wherein said second drum volume is larger than said first volume, said larger second drum volume allowing said second residence time being longer than said first residence time; or
- wherein said second rotating drum includes a greater diameter than said first rotating drum, said first drum volume and said second drum volume being communicable via insertion of an output end (41) of said first rotating drum into an input end (44) of said second rotating drum, said insertion allowing the individual pieces of confectionary product to flow from said first drum volume to said second drum volume;
wherein said insertion of said output end of said first rotating drum into said input end of said second rotating drum creates an annulus (45) at an overlap of said first rotating drum and said second rotating drum, said supplying of said dry powder material into said second drum volume occurring via a powder feed tube (68) inserted into said second drum volume through said annulus;
optionally further including adjusting said powder tube to a desired dry powder material output position along a length of said second rotating drum volume; or
- wherein said second rotating drum includes a greater length than said first rotating drum.

12. The method of claim 8, wherein said at least one drum coating arrangement is multiple drum arrangements arranged in series and each including said first rotating drum and said second rotating drum, optionally further including conveying the individual pieces of confectionary product between said multiple drum coating arrangements, said conveying including a vibrating the individual pieces of confectionary product to remove excess dry powder material.

13. The method of claim 8, further including rotating said first rotating drum and said second rotating drum at different speeds, or further including inclining said first drum and said second drum at different angles.

## Patentansprüche

1. System zum kontinuierlichen Beschichten einzelner Stücke eines Süßwarenprodukts (12), wobei das System umfasst:
eine Produktvorschubvorrichtung (14);
wenigstens eine Trommelbeschichtungsanordnung, die dafür konfiguriert ist, die einzelnen Stücke des Süßwarenprodukts von der Produktvorschubvorrichtung zu empfangen, wobei die Trommelbeschichtungsanordnung eine erste rotierende Trommel (18), die um eine erste Trommelachse drehbar ist, und eine zweite rotierende Trommel (20), die um eine zweite Trommelachse drehbar ist, enthält;
ein erstes Trommelvolumen, das durch die erste rotierende Trommel definiert ist; und
ein zweites Trommelvolumen, das durch die zweite rotierende Trommel definiert ist, wobei das erste Trommelvolumen mit dem zweiten Trommelvolumen verbunden werden kann, wobei die erste rotierende Trommel dafür konfiguriert ist, auf die einzelnen Stücke des Süßwarenprodukts ein flüssiges Material aufzutragen, und wobei die zweite rotierende Trommel dafür konfiguriert ist, auf die einzelnen Stücke des Süßwarenprodukts ein trockenes Pulvermaterial aufzutragen;
wobei die Trommelbeschichtungsanordnung so konfiguriert ist, dass das Süßwarenprodukt in dem zweiten Trommelvolumen eine längere Verweilzeit als in dem ersten Trommelvolumen hat.

2. System nach Anspruch 1, wobei das zweite Trommelvolumen größer als das erste Volumen ist, wobei das größere zweite Trommelvolumen ermöglicht, dass die Stücke des Süßwarenprodukts die längere Verweilzeit in dem zweiten Trommelvolumen als in dem ersten Trommelvolumen erzielen;
- oder wobei die zweite rotierende Trommel einen größeren Durchmesser als die erste rotierende Trommel enthält, wobei das erste Trommelvolumen und das zweite Trommelvolumen über Einführen eines Ausgangsendes (41) der ersten rotierenden Trommel in ein Eingangsende (44) der zweiten rotierenden Trommel verbunden werden können, wobei das Einführen ermöglicht, dass die einzelnen Stücke des Süßwarenprodukts von dem ersten Trommelvolumen zu dem zweiten Trommelvolumen strömen oder wobei das Einführen des Ausgangsendes der ersten rotierenden Trommel in das Eingangsende der zweiten rotierenden Trommel bei einer Überlappung der ersten rotierenden Trommel und der zweiten rotierenden Trommel einen Ringraum (45) erzeugt, wobei das trockene Pulvermaterial über ein durch den Ringraum in das zweite Trommelvolumen eingeführtes Pulverrohr (68) in das zweite Trommelvolumen zugeführt wird,
wobei das Pulverrohr für die Einstellbarkeit der trockenen Pulvermaterial-Ausgabestelle entlang einer Länge des zweiten Trommelvolumens konfiguriert ist;
- oder wobei die zweite rotierende Trommel eine größere Länge als die erste rotierende Trommel enthält.

3. System nach Anspruch 1, wobei die erste rotierende Trommel dafür konfiguriert ist, auf die einzelnen Stücke des Süßwarenprodukts ein flüssiges Material aufzutragen, und wobei die zweite rotierende Trommel dafür konfiguriert ist, auf die einzelnen Stücke des Süßwarenprodukts ein trockenes Pulvermaterial aufzutragen;
- oder wobei das flüssige Material über eine Düse (50), die in eine Produkteingangsöffnung bei einem Produkteingangsende der ersten rotierenden Trommel eingeführt ist, optional in das erste Trommelvolumen zugeführt wird, wobei die Düse optional dafür konfiguriert ist, das flüssige Material über ein Tropfen und/oder ein Träufeln und/oder ein Sprühen des flüssigen Materials in das erste Trommelvolumen zu liefern; oder
- wobei die Düse für die Einstellbarkeit der Ausgabestelle des flüssigen Materials entlang einer Länge des ersten Trommelvolumens konfiguriert ist;
- oder wobei die erste rotierende Trommel die einzelnen Stücke des Süßwarenprodukts von der Produktzufuhr empfängt und wobei die zweite rotierende Trommel die einzelnen Stücke des Süßwarenprodukts von der ersten rotierenden Trommel empfängt, wobei die Trommelbeschichtungsanordnung an einer Neigung positioniert ist, wobei ein höchster Punkt bei einem Produkteingang der ersten rotierenden Trommel angeordnet ist und wobei ein tiefster Punkt bei einem Produktausgang der zweiten rotierenden Trommel angeordnet ist, wobei die Neigung ermöglicht, dass sich die einzelnen Stücke des Süßwarenprodukts durch die Trommelbeschichtungsanordnung bewegen;
- oder wobei die erste rotierende Trommel über einen Verriegelungsmechanismus, der eine Außenoberfläche sowohl der ersten rotierenden Trommel als auch der zweiten rotierenden Trommel berührt, an der zweiten rotierenden Trommel befestigt ist.

4. System nach Anspruch 1, wobei zwischen dem ersten Trommelvolumen und dem zweiten Trommelvolumen eine Überlaufplatte (62) angeordnet ist, wobei die Überlaufplatte relativ zu dem ersten Trommelvolumen und zu dem zweiten Trommelvolumen einstellbar positioniert ist, um den Produktfluss von dem ersten Trommelvolumen zu dem zweiten Trommelvolumen zu steuern.

5. System nach Anspruch 1, wobei die erste rotierende Trommel eine Lösehilfsstange (58) enthält, die von einer Öffnung bei einem Ausgangsende der ersten rotierenden Trommel in die erste rotierende Trommel eingeführt ist, wobei die Lösehilfsstange in der Nähe einer Innenoberfläche der ersten rotierenden Trommel im Wesentlichen parallel zu der ersten Trommelachse angeordnet ist, wobei die Lösehilfsstange dafür konfiguriert ist, die Stücke des Süßwarenprodukts, die an der Innenoberfläche der ersten rotierenden Trommel anhaften, über die Nähe zu der Innenoberfläche abzulösen; oder
wobei mindestens eine Innenoberfläche der ersten rotierenden Trommel und eine Innenoberfläche der zweiten rotierenden Trommel Rippen enthält.

6. System nach Anspruch 1, wobei die mindestens eine Trommelbeschichtungsanordnung mehrere Trommelanordnungen sind, die der Reihe nach angeordnet sind und die jeweils die erste rotierende Trommel und die zweite rotierende Trommel enthalten, wobei das System optional ferner zwischen den mehreren Trommelbeschichtungsanordnungen eine Fördereinrichtung (76) enthält, wobei die Fördereinrichtung einen Rüttelabschnitt enthält, der dafür konfiguriert ist, überschüssiges trockenes Pulvermaterial von den einzelnen Stücken des Süßwarenprodukts zu entfernen, wobei der Rüttelabschnitt Öffnungen enthält, die in versetzter Ausrichtung angeordnet sind.

7. System nach Anspruch 1, wobei die erste rotierende Trommel und die zweite rotierende Trommel mit unterschiedlichen Drehzahlen drehbar sind oder wobei die erste rotierende Trommel und die zweite rotierende Trommel unabhängig neigbar sind.

8. Verfahren zum kontinuierlichen Beschichten einzelner Stücke eines Süßwarenprodukts (12), wobei das Verfahren umfasst:
Zuführen der einzelnen Stücke des Süßwarenprodukts von einer Produktzufuhrvorrichtung (14) in mindestens eine Trommelbeschichtungsanordnung, wobei die Trommelbeschichtungsanordnung eine erste rotierende Trommel (18) und eine zweite rotierende Trommel (20) enthält;
Transportieren der einzelnen Stücke des Süßwarenprodukts durch ein erstes Trommelvolumen, das durch die erste rotierende Trommel definiert ist, wobei das Transportieren durch das erste Trommelvolumen in einer ersten Verweilzeit stattfindet;
Auftragen eines flüssigen Materials auf die einzelnen Stücke des Süßwarenprodukts während der ersten Verweilzeit;
Umsetzen der einzelnen Stücke des Süßwarenprodukts von dem ersten Trommelvolumen in das zweite Trommelvolumen, das durch die zweite rotierende Trommel definiert ist;
Transportieren der einzelnen Stücke des Süßwarenprodukts durch das zweite Trommelvolumen, wobei das Transportieren durch das zweite Trommelvolumen in einer zweiten Verweilzeit stattfindet, wobei die zweite Verweilzeit länger als die erste Verweilzeit ist; und
Auftragen eines trockenen Pulvers auf die einzelnen Stücke des Süßwarenprodukts während der zweiten Verweilzeit.

9. Verfahren nach Anspruch 8, wobei das Auftragen des flüssigen Materials mindestens Tropfen und/oder Träufeln und/oder Sprühen des flüssigen Materials in das erste Trommelvolumen über eine Düse (50), die in eine Produkteingangsöffnung bei einem Produkteingangsende der ersten rotierenden Trommel eingeführt ist, enthält;
- wobei es optional ferner das Einstellen der Düse auf eine gewünschte Ausgabestelle des flüssigen Materials entlang einer Länge des ersten Trommelvolumens enthält; oder
- wobei es optional ferner das Binden des flüssigen Materials an die einzelnen Stücke des Süßwarenprodukts über das Auftragen des flüssigen Materials und das Binden des trockenen Pulvermaterials an das flüssige Material über das Auftragen des trockenen Pulvermaterials enthält; oder
- wobei es ferner das Bereitstellen eines weichen Außenbeschichtungsmaterials auf den einzelnen Stücken des Süßwarenprodukts über das flüssige Material und dem trockenen Pulvermaterial, das an das flüssige Material gebunden ist, enthält; oder
- wobei es optional ferner das Aufbereiten der einzelnen Stücke des Süßwarenprodukts mit der weichen Außenbeschichtung bei einer verringerten Temperatur und Feuchtigkeit relativ zu einer Temperatur und Feuchtigkeit einer Umgebung der Trommelbeschichtungsanordnung enthält, wobei das Aufbereiten für wenigstens 18 Stunden stattfindet; und
wobei es optional ferner das Auftragen einer harten Außenbeschichtung auf die einzelnen Stücke des Süßwarenprodukts nach dem Aufbereiten enthält, wobei das Auftragen der harten Außenbeschichtung in einem Chargenbeschichtungsmischer stattfindet; oder
- wobei es ferner das Befestigen der ersten rotierenden Trommel an der zweiten rotierenden Trommel über einen Verriegelungsmechanismus in Kontakt mit einer Außenoberfläche sowohl der ersten rotierenden Trommel als auch der zweiten rotierenden Trommel enthält.

10. Verfahren nach Anspruch 8, wobei das Transportieren über ein Positionieren der Trommelbeschichtungsanordnung auf einer Neigung stattfindet, wobei die Trommelbeschichtungsanordnung einen höchsten Punkt, der bei einem Produkteingang der ersten rotierenden Trommel angeordnet ist, und einen tiefsten Punkt, der bei einem Produktausgang der zweiten rotierenden Trommel angeordnet ist, enthält.

11. Verfahren nach Anspruch 8, wobei das zweite Trommelvolumen größer als das erste Volumen ist, wobei das größere zweite Trommelvolumen ermöglicht, dass die zweite Verweilzeit länger als die erste Verweilzeit ist; oder
- wobei die zweite rotierende Trommel einen größeren Durchmesser als die erste rotierende Trommel enthält, wobei das erste Trommelvolumen und das zweite Trommelvolumen über das Einführen eines Ausgangsendes (41) der ersten rotierenden Trommel in ein Eingangsende (44) der zweiten rotierenden Trommel verbunden werden können, wobei das Einführen ermöglicht, dass die einzelnen Stücke des Süßwarenprodukts von dem ersten Trommelvolumen zu dem zweiten Trommelvolumen strömen;
wobei das Einführen des Ausgangsendes der ersten rotierenden Trommel in das Eingangsende der zweiten rotierenden Trommel bei einer Überlappung der ersten rotierenden Trommel und der zweiten rotierenden Trommel einen Ringraum (45) erzeugt, wobei das Liefern des trockenen Pulvermaterials in das zweite Trommelvolumen über ein Pulverzufuhrrohr (68) stattfindet, das durch den Ringraum in das zweite Trommelvolumen eingeführt ist;
wobei das Verfahren optional ferner das Einstellen des Pulverrohrs auf eine gewünschte trockene Pulvermaterial-Ausgangsstelle entlang einer Länge des Volumens der zweiten rotierenden Trommel enthält; oder
- wobei die zweite rotierende Trommel eine größere Länge als die erste rotierende Trommel enthält.

12. Verfahren nach Anspruch 8, wobei die mindestens eine Trommelbeschichtungsanordnung mehrere Trommelanordnungen sind, die der Reihe nach angeordnet sind und die jeweils die erste rotierende Trommel und die zweite rotierende Trommel enthalten, wobei das Verfahren optional ferner das Fördern der einzelnen Stücke des Süßwarenprodukts zwischen den mehreren Trommelbeschichtungsanordnungen enthält, wobei das Fördern ein Rütteln der einzelnen Stücke des Süßwarenprodukts, um überschüssiges Trockenpulvermaterial zu entfernen, enthält.

13. Verfahren nach Anspruch 8, das ferner das Rotieren der ersten rotierenden Trommel und der zweiten rotierenden Trommel mit unterschiedlichen Drehzahlen enthält oder das ferner das Neigen der ersten Trommel und der zweiten Trommel unter unterschiedlichen Winkeln enthält.

## Revendications

1. Système pour enrober en continu des pièces individuelles de produit (12) de confiserie, le système comprenant :
un dispositif (14) d'alimentation en produit;
au moins un agencement d'enrobage à tambours, configuré pour recevoir les pièces individuelles de produit de confiserie du dispositif d'alimentation en produit, l'agencement d'enrobage à tambour comprenant un premier tambour (18) tournant pouvant tourner autour d'un premier axe de tambour et un deuxième tambour (20) tournant pouvant tourner autour d'un deuxième axe de tambour;
un premier volume de tambour défini par le premier tambour tournant et
un deuxième volume de tambour défini par le deuxième tambour tournant, le premier volume de tambour pouvant communiquer avec le deuxième volume de tambour, le premier tambour tournant étant configuré pour appliquer une matière liquide aux pièces individuelles de produit de confiserie et le deuxième tambour tournant étant configuré pour appliquer une matière sèche en poudre aux pièces individuelles du produit de confiserie;
dans lequel l'agencement d'enrobage à tambours est configuré de manière à ce que le produit de confiserie ait un temps de séjour plus long dans le deuxième volume de tambour que dans le premier volume de tambour.

2. Système suivant la revendication 1, dans lequel le deuxième volume de tambour est plus grand que le premier volume, le deuxième volume de tambour plus grand permettant aux pièces du produit de confiserie d'avoir le temps de séjour dans le deuxième volume de tambour plus grand que dans le premier volume de tambour;
- ou dans lequel le deuxième tambour tournant comprend un diamètre plus grand que le premier tambour tournant, le premier volume de tambour et le deuxième volume de tambour pouvant communiquer par insertion d'une extrémité (41) de sortie du premier tambour tournant dans une extrémité (44) d'entrée du deuxième tambour tournant, l'insertion permettant aux pièces individuelles du produit de confiserie de s'écouler du premier volume de tambour au deuxième volume de tambour ou dans lequel l'insertion de l'extrémité de sortie du premier tambour tournant dans l'extrémité d'entrée du deuxième tambour tournant crée un anneau (45) à un chevauchement du premier tambour tournant et du deuxième tambour tournant, la matière sèche en poudre étant envoyée dans le deuxième volume de tambour tournant par un tube (68) pour de la poudre inséré dans le deuxième volume de tambour par l'anneau,
dans lequel le tube pour de la poudre est configuré pour pouvoir régler la position de sortie de la matière sèche en poudre sur une longueur du deuxième volume de tambour;
- ou dans lequel le deuxième tambour tournant comprend une longueur plus grande que le premier tambour tournant.

3. Système suivant la revendication 1, dans lequel le premier tambour tournant est configuré pour appliquer une matière liquide aux pièces individuelles du produit de confiserie et le deuxième tambour tournant est configuré pour appliquer une matière sèche en poudre aux pièces individuelles du produit de confiserie;
- ou dans lequel la matière liquide est éventuellement envoyée dans le premier volume de tambour par une buse (50) insérée dans une ouverture d'entrée du produit à une extrémité d'entrée du produit du premier tambour tournant, la buse étant configurée éventuellement pour envoyer la matière liquide par au moins l'un d'un égouttage, d'une aspersion et d'une pulvérisation de la matière liquide dans le premier volume de tambour ou
- dans lequel la buse est configurée pour pouvoir régler la position de sortie de la matière liquide sur une longueur du premier volume de tambour;
- ou dans lequel le premier tambour tournant reçoit les pièces individuelles de produit de confiserie de l'alimentation en produit et le deuxième tambour tournant reçoit les pièces individuelles du produit de confiserie du premier tambour tournant, l'agencement d'enrobage à tambours étant placé sur une rampe dont le point le plus haut est disposé à une entrée de produit du premier tambour tournant et le point le plus bas à une sortie de produit du deuxième tambour tournant, la pente permettant aux pièces individuelles du produit de confiserie de se déplacer dans l'agencement d'enrobage à tambours;
- ou dans lequel le premier tambour tournant est fixé au deuxième tambour tournant par un mécanisme de verrouillage en contact avec une surface extérieure de chacun du premier tambour tournant et du deuxième tambour tournant.

4. Système suivant la revendication 1, dans lequel une plaque (62), formant déversoir, est placée de manière réglable par rapport au premier volume de tambour et au deuxième volume de tambour, de manière à régler le courant de produit allant du premier volume de tambour au deuxième volume de tambour.

5. Système suivant la revendication 1, dans lequel le premier tambour tournant comprend une barre (58) facilitant la libération, insérée dans le premier volume de tambour à partir d'une ouverture à une extrémité de sortie du premier tambour tournant, la barre facilitant la libération étant disposée sensiblement parallèlement à l'axe du premier tambour à proximité d'une surface intérieure du premier tambour tournant, la barre facilitant une libération étant configurée pour déloger les pièces de produit de confiserie qui adhèrent à la surface intérieure du premier tambour tournant par l'intermédiaire de la proximité à la surface intérieure ou dans lequel au moins l'un d'une surface intérieure du premier tambour tournant et d'une surface intérieure du deuxième tambour tournant comprend des nervures.

6. Système suivant la revendication 1, dans lequel le au moins un agencement d'enrobage à tambours est une multiplicité d'agencements à tambours montés en séries et chacun d'eux comprend le premier tambour tournant et le deuxième tambour tournant, en comprenant éventuellement un convoyeur (76) entre la multiplicité d'agencements d'enrobage à tambours, le convoyeur comprenant une partie vibrante configurée pour retirer un excès de matière sèche en poudre des pièces individuelles du produit de confiserie, la partie vibrante comprenant des ouvertures en quinconce.

7. Système suivant la revendication 1, dans lequel le premier tambour tournant et le deuxième tambour tournant peuvent tourner à des vitesses différentes ou dans lequel le premier tambour tournant et le deuxième tambour tournant peuvent être inclinés indépendamment.

8. Procédé d'enrobage en continu de pièces individuelles de produit (12) de confiserie, le procédé comprenant :
envoyer les pièces individuelles du produit de confiserie d'un dispositif (14) d'alimentation en produit dans au moins un agencement d'enrobage à tambours, l'agencement d'enrobage à tambours comprenant un premier tambour (18) tournant et un deuxième tambour (20) tournant;
transporter les pièces individuelles du produit de confiserie dans un premier volume de tambour défini par le premier tambour tournant, ce transport dans le premier volume de tambour se produisant dans un premier temps de séjour;
appliquer une matière liquide aux pièces individuelles du produit de confiserie pendant le premier temps de séjour;
transférer les pièces individuelles du produit de confiserie du premier volume de tambour à un deuxième volume de tambour défini par le deuxième tambour tournant;
transporter les pièces individuelles du produit de confiserie dans le deuxième volume de tambour, le transport dans le deuxième volume de tambour se produisant dans un deuxième temps de séjour, le deuxième temps de séjour étant plus long que le premier temps de séjour et
appliquer une poudre sèche aux pièces individuelles du produit de confiserie pendant le deuxième temps de séjour.

9. Procédé suivant la revendication 8, dans lequel l'application de la matière liquide comprend au moins l'un d'un égouttage, d'une aspersion et d'une pulvérisation de la matière liquide dans le premier volume de tambour par une buse (50) insérée dans une ouverture d'entrée du produit à une extrémité d'entrée du produit du premier tambour tournant;
- comprenant éventuellement, en outre, régler la buse à une position souhaitable de sortie de la matière liquide sur une longueur du premier volume de tambour ou
- comprenant éventuellement, en outre, lier la matière liquide aux pièces individuelles du produit de confiserie par le biais de l'application de la matière liquide et lier la matière sèche en poudre à la matière liquide par le biais de l'application de la matière sèche en poudre ou
- comprenant, en outre, fournir une matière souple d'enrobage extérieur sur les pièces individuelles de confiserie par l'intermédiaire de la matière liquide et de la matière sèche en poudre liée à la matière liquide ou
- comprenant éventuellement, en outre, inclure un conditionnement des pièces individuelles de confiserie par l'enrobage souple extérieur à une pression réduite et à une humidité relative réduite par rapport à une température et une humidité de l'atmosphère ambiant de l'agencement d'enrobage à tambours, ce conditionnement se produisant pendant au moins 18 heures et
comprenant éventuellement, en outre, appliquer un enrobage extérieur dur sur les pièces individuelles du produit de confiserie après le conditionnement, cette application d'un enrobage extérieur dur se produisant dans un mélangeur d'enrobage en discontinu ou
- comprenant, en outre, fixer le premier tambour tournant au deuxième tambour tournant par un mécanisme de verrouillage en contact avec une surface extérieure de chacun du premier tambour tournant et du deuxième tambour tournant.

10. Procédé suivant la revendication 8, dans lequel le transport se produit par l'intermédiaire d'une mise en position de l'agencement d'enrobage à tambours sur une rampe, l'agencement d'enrobage à tambours comprenant un point le plus haut, disposé à une entrée de produit du premier tambour tournant et un point le plus bas disposé à une sortie de produit du deuxième tambour tournant.

11. Procédé suivant la revendication 8, dans lequel le deuxième volume de tambour est plus grand que le premier volume, le deuxième volume de tambour plus grand permettant aux pièces du produit de confiserie d'avoir le temps de séjour dans le deuxième volume de tambour plus grand que dans le premier volume de tambour;
- ou dans lequel le deuxième tambour tournant comprend un diamètre plus grand que le premier tambour tournant, le premier volume de tambour et le deuxième volume de tambour pouvant communiquer par insertion d'une extrémité (41) de sortie du premier tambour tournant dans une extrémité (44) d'entrée du deuxième tambour tournant, l'insertion permettant aux pièces individuelles du produit de confiserie de s'écouler du premier volume de tambour au deuxième volume de tambour ou dans lequel l'insertion de l'extrémité de sortie du premier tambour tournant dans l'extrémité d'entrée du deuxième tambour tournant crée un anneau (45) à un chevauchement du premier tambour tournant et du deuxième tambour tournant, la matière sèche en poudre étant envoyée dans le deuxième volume de tambour tournant par un tube (68) pour de la poudre inséré dans le deuxième volume de tambour par l'anneau,
dans lequel le tube pour de la poudre est configuré pour pouvoir régler la position de sortie de la matière sèche en poudre sur une longueur du deuxième volume de tambour;
- ou dans lequel le deuxième tambour tournant comprend une longueur plus grande que le premier tambour tournant.

12. Procédé suivant la revendication 8, dans lequel le au moins un agencement d'enrobage à tambours est une multiplicité d'agencements à tambours montés en séries et chacun comprend un premier tambour tournant et un deuxième tambour tournant, comprenant éventuellement, en outre, transporter les pièces individuelles du produit de confiserie entre la multiplicité d'agencements d'enrobage à tambours, le transport comprenant faire vibrer les pièces individuelles du produit de confiserie pour retirer de la matière sèche en poudre en excès.

13. Procédé suivant la revendication 8, comprenant, en outre, faire tourner le premier tambour tournant et le deuxième tambour tournant à des vitesses différentes ou comprenant, en outre, incliner le premier tambour et le deuxième tambour à des angles différents.
